# EUROPÄISCHE PATENTSCHRIFT

(11) **EP 0 392 527 B1**
(45) Veröffentlichungstag und Bekanntmachung des Hinweises auf die Patenterteilung: **10.02.1993**
(21) Anmeldenummer: 90107011.0
(22) Anmeldetag: 11.04.1990
(51) Int. Cl.: F02C 7/042, F02K 3/075, F02K 7/16

(54) **Integriertes Turbo-Staustrahltriebwerk**
Combined turbo/ramjet engine
Propulseur turbo-statoréacteur combiné

(30) Priorität: 14.04.1989 DE 3912330
(43) Veröffentlichungstag der Anmeldung: 17.10.1990
(73) Patentinhaber: MTU MOTOREN- UND TURBINEN-UNION MÜNCHEN GMBH, D-80976 München (DE)
(72) Erfinder: Enderle, Heinrich, D-8038 Gröbenzell (DE)

(56) Entgegenhaltungen:
- GB-A- 799 504
- GB-A- 924 331
- GB-A- 2 192 941
- GB-A- 2 205 360
- US-A- 2 955 414
- US-A- 2 970 431

## Beschreibung

Die Erfindung betrifft ein integriertes Turbo-Staustrahltriebwerk für ein Hyperschallflugzeug mit einem gemeinsamen Lufteinlaß für den Turbo- und den Staustrahlkreis, einem ringförmigen Turboeinlaßkanal, einem diesen konzentrisch umgebenden Staulufteinlaßkanal, der außenseitig von einem Triebwerksgehäuse begrenzt ist, einem Eintrittskonus und beweglichen Mitteln zum Ablenken des Luftstromes aus dem gemeinsamen Lufteinlaß in eine der beiden Einlaßkanäle.

Es sind Bestrebungen zur Entwicklung von Hyperschallflugzeugen im Gange, die auf normalen Flugplätzen starten und landen können sowie Reisefluggeschwindigkeiten von mehreren Mach entwickeln. Derartige Hyperschallflugzeuge können entweder als schnelle Langstreckentransportflugzeuge oder als normal startende Raumtransporter Verwendung finden. Die erzielbaren Machzahlen bewegen sich zwischen 4 und 8 Mach bei Flughöhen um die 30 km.

Triebwerke zum Antrieb derartiger Flugzeuge müssen eine Reihe von Forderungen erfüllen, die mittels herkömmlicher Triebwerkskonzepte nicht erreichbar sind. So muß einerseits bei niedrigen Fluggeschwindigkeiten unterhalb Mach 1 bis hinauf zu den Spitzengeschwindigkeiten eine ausreichende Leistungsabgabe erfolgen. Hierzu ist vorgeschalgen worden, kombinierte Turbo-Staustrahltriebwerke vorzusehen, die bei niedrigen Fluggeschwindigkeiten als Gasturbinenstrahltriebwerk mit oder ohne Nachbrenner arbeiten, und oberhalb einer bestimmten Fluggeschwindigkeit als Staustrahltriebwerke (RAM-Betrieb) arbeiten.

Eine Ausführung derartiger Triebwerke sieht vor, daß ein Gasturbinentriebwerk beidseitig mit verschleißbaren Klappen versehen ist, und ein Nachbrenner stromab der Gasturbine gleichzeitig als Staustrahlbrennerkammer dient. Dafür ist ein ringförmiger Stauluftkanal konzentrisch außerhalb der Gasturbine vorgesehen, durch den bei Staustrahlbetrieb die einströmende Luft unter Umgehung der Gasturbine direkt in die Brennkammer geleitet wird. Hierzu sind im Bereich des Einlaufkanales und hinter der Turbine bewegliche Leitbleche vorgesehen, die wahlweise den Luftstrom entweder in den konzentrisch innenliegenden Turboeinlaßkanal und somit durch das Gasturbinenkerntriebwerk, oder in den konzentrisch außenliegenden Staulufteinlaßkanal leiten.

Ein wesentliches Problem bei derartigen umschaltbaren Triebwerken ist, daß der Triebwerksaußendurchmesser so gering wie möglich gehalten werden muß. Dessen Mindestmaß ist festgelegt durch die Querschnitte der beiden Einlaßkanäle sowie den im Nabenbereich für das Kerntriebwerk erforderlichen Innendurchmesser.

Eine denkbare, konstruktiv sehr einfache Möglichkeit zur alternativen Beaufschlagung der Einlaßkanäle besteht darin, einen axial verschiebbaren Leitblechring vorzusehen, der in einer ersten Stellung den Staulufteinlaßkanal, in einer zweiten Stellung den Turboeinlaßkanal verschließt. Eine derartige Lösung hat jedoch den Nachteil, daß die Einlaßkanäle komplexe Verläufe annehmen und ein über den Mindestdurchmesser hinausgehender Triebwerksaußendurchmesser erforderlich ist. Derartige Durchmesservergrößerungen, die im Bereich einiger Dezimeter liegen, führen bei den hohen Geschwindigkeiten aufgrund der vergrößerten Querschnittsfläche zu einem erhöhten Strömungswiderstand.

Es ist daher Aufgabe der vorliegenden Erfindung, ein gattungsgemäßes Turbo-Staustrahltriebwerk derart auszubilden, daß eine Ablenkung des Luftstromes in die beiden Einlaßkanäle möglich ist, ohne daß eine Vergrößerung des Triebwerksaußendurchmessers erforderlich ist.

Erfindungsgemäß wird diese Aufgabe durch die im Kennzeichnungsteil des Patentanspruchs 1 angegebenen Merkmale gelöst.

Der wesentliche Vorteil der Erfindung ist darin zu sehen, daß trotz Beibehaltung des durch die Einlaßkanäle definierten Mindestdurchmessers eine Ablenkung des Luftstromes in die beiden Einlaßkanäle möglich ist, wobei gleichzeitig eine verlustarme Gehäusekontur der Strömungskanäle erzielbar ist. Ferner wird durch diese Anordnung auch im kritischen Moment des Umschaltens von Turbo- auf Staustrahlbetrieb eine Aufrechterhaltung der Triebwerksleistung dadurch erzielt, daß die anströmende Luft gezielt und kontinuierlich von einem Einlaufkanal in Verbindung mit dem Verschluß hinter der Turbine in den anderen umgelenkt werden kann.

Weitere Vorteile der Erfindung sind die kurze Baulänge des Verschlusses und die kurzen Hübe der Verstellvorrichtungen. Und es sind bei Staustrahlbetrieb gute Kühlungsmöglichkeiten für den thermisch beanspruchten Eintrittskonus und Ringkonus mittels Filmkühlung durch Kaltlufteinblasung möglich.

In vorteilhafter Weiterbildung der Erfindung hat der Leitring eine etwa konisch sich verjüngende Vorderseite und eine sich daran anschließende etwa konisch sich erweiternde Rückseite. Der Leitring ist somit etwa keilförmig aufgebaut, wobei die Vorderseite zur Bildung einer aerodynamisch günstigen Strömungskontur des Turboeinlaufkanals bei Turbobetrieb ausgeformt ist. In diesem Betriebszustand befindet sich der Leitring in seiner axial hinteren Stellung und dessen Vorderseite ist vorteilhafterweise so geformt, daß die Wandkontur vom Außengehäuse zum Zwischengehäuse, welches gleichzeitig die Außenbegrenzung des Turboeinlaßkanals darstellt, geringstmögliche Strömungsverluste hervorruft. Die Rückseite des Leitringes ist derart ausgebildet, daß sie im Zusammenwirken mit dem Ringkonus bei Staustrahlbetrieb einen mit einem Staulufteinlaßkanal verbundenen Ringkanal definiert. Hierzu ist die Rückseite vorzugsweise konisch ausgebildet.

Bei Staustrahlbetrieb befindet sich der Leitring in seiner axial vorderen Stellung, wobei gleichzeitig der Ringkonus etwas hinter und radial innerhalb des Leitrings angeordnet ist. Die Rückseite des Leitringes definiert hierbei den vorderen Abschnitt der Staulufteinlaßkanalaußenwandung. Gleichzeitig ist der Ringkonus so geformt, daß ein stetiger Strömungsverlauf vom Eintrittskonus zum Zwischengehäuse hin möglich ist.

Die Ringkante zwischen der Vorderseite und der Hinterseite des Leitringes ist ferner so geformt, daß bei Staustrahlbetrieb ein möglichst geringer Strömungsverlust in diesem Bereich entsteht.

Eine weitere vorteilhafte Ausgestaltung der Erfindung besteht darin, daß die vordere axiale Position des Ringkonus derart festgelegt ist, daß der zwischen dem Ringkonus und dem Eintrittskonus gebildete Ringkanal mindestens den Querschnitt des Staulufteinlaßkanales aufweist. Diese Anordnung hat den Vorteil, daß während des Umschaltens von Turbo- auf Staustrahlbetrieb nach dem Öffnen des Staulufteinlaßkanales durch Vorschieben des Leitringes eine ausreichende Beaufschlagung des Staulufteinlaßkanales mit Luft erzielbar ist.

Eine erfindungsgemäße Weiterbildung der Erfindung sieht vor, daß zum Umschalten von Turbo- auf Staustrahlbetrieb zunächst der Leitring aus einer axial hinteren Position nach vorne verschiebbar ist, und anschließend der Ringkonus aus einer axial vorderen Position nach hinten verschoben wird. Etwa gleichzeitig mit dem Vorbewegen des Leitringes wird eine stromab des Kerntriebwerkes angeordnete Verschlußklappe schließen, so daß keine Luft mehr in den Turboeinlaßkanal gesaugt wird. D.h. mit dem Vorbewegen des Leitringes wird der Staulufteinlaßkanal freigegeben und die anströmende Luft in diesen geleitet. Anschließend wird der Ringkonus aus einer vorderen Position nach hinten verschoben, und verschließt in seiner Endposition den Turboeinlaßkanal vollständig.

Es ist alternativ auch möglich, die beiden entgegengesetzt gerichteten Bewegunmgen von Leitring und Ringkonus nicht hintereinander, sondern teilweise oder gänzlich gleichzeitig durchzuführen. Hierdurch läßt sich die Umschaltzeit von Turbo- auf Staustrahlbetrieb und umgekehrt vorteilhafterweise verkürzen.

Der Ringkonus besitzt vorzugsweise die Fortsetzung der Kontur des Eintrittskonus, und kann bei Bedarf eine Krümmung aufweisen, vorzugsweise aus Einlaufrichtung betrachtet eine Außenkrümmung (konvex), wenn der Eintrittskonus eine Krümmung in dieser Form aufweist.

Der Ringkonus ist mittels Verstellvorrichtungen axial bewegbar, wobei gleichzeitig die axiale Führung und Arretierung in bestimmten Stellungen erfolgt.

Die Erfindung wird nachfolgend anhand der beigefügten Zeichnung erläutert. Dabei zeigt:
Fig. 1 einen Axialschnitt durch ein integriertes Turbo-Staustrahltriebwerk,
Fig. 2 einen Ausschnitt dieses Triebwerks im Staustrahlbetrieb,
Fig. 3 den gleichen Ausschnitt des Triebwerkes im Turbo-betrieb.

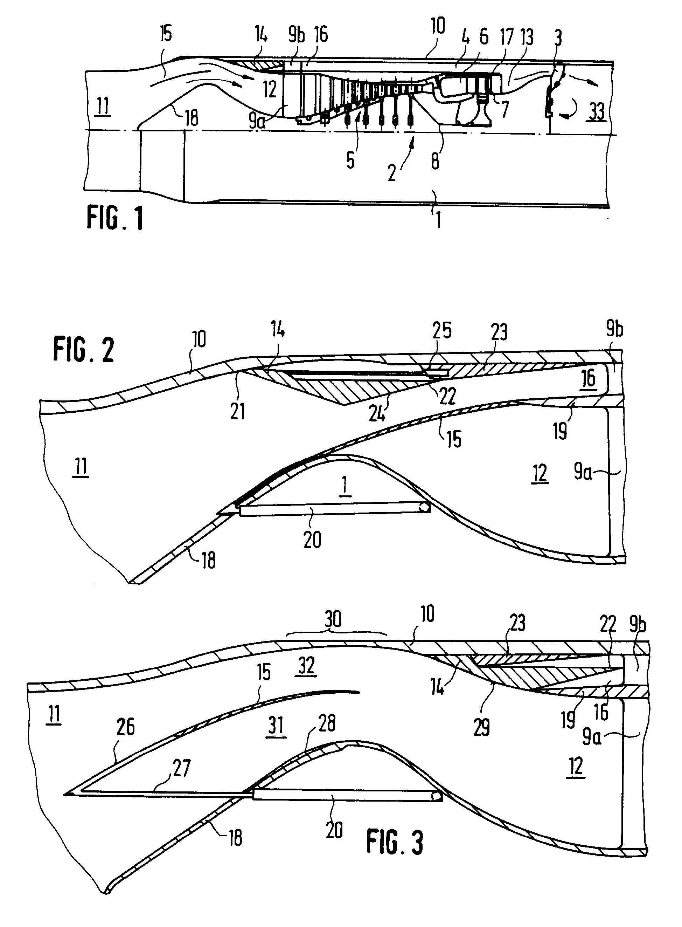

In Fig. 1 ist im Axialschnitt ein integriertes Turbo-Staustrahltriebwerk 1 dargestellt, das von Turbo- auf Staustrahlbetrieb umschaltbar ist. Es besteht im wesentlichen aus einer Gasturbine 2 mit Einspritzvorrichtungen 3, die sowohl bei Turbobetrieb als Nachbrennereinspritzvorrichtung, als auch im Staustrahlbetrieb als Staustrahleinspritzvorrichtungen arbeiten, wobei die Stauluft über den ringförmigen Kanal 4 unter Umgehung der Gasturbine 2 direkt einem hinter den Einspritzvorrichtungen 3 angeordneten Nachbrennerrohr 33 zugeführt wird.

Die Gasturbine 2 besteht aus einem 6-stufigen Verdichter 5, dem eine Brennkammer 6 und eine einstufige Turbine 7 nachgeschaltet ist. Verdichter 5 und Turbine 7 sind über eine gemeinsame Welle 8 mit einander verbunden. Es ist ebenso möglich das Triebwerk als Zwei- oder Drei-Wellentriebwerk, je nach Anforderungen auszubilden, ohne den Rahmen der Erfindung zu verlassen. Die Gewichtskräfte und die in der Gasturbine 2 erzeugten Gaskräfte werden über mehrere am Umfang verteilte Stützrippen 9a, 9b zum Triebwerksgehäuse 10 geleitet, das wiederum am Flugzeug befestigt ist.

In der in Fig. 1 gezeigten Stellung befindet sich das Turbo-Staustrahltriebwerk 1 im Turbobetrieb, d.h. die im gemeinsamen Lufteinlaß 11 anströmende Luft wird in den Turbolufteinlaßkanal 12 geleitet und verläßt die Gasturbine 2 am Gasturbinenauslaß 13 unter Umströmung der Einspritzvorrichtung 3 und Einströmung in das Nachbrennerrohr 33 wieder.

Zum Umschalten von dem gezeigten Turbo- auf Staustrahlbetrieb wird im Bereich des Lufteinlasses 11 ein Leitring 14 und ein Ringkonus 15 axial gegeneinander verschoben, derart, daß der Turbolufteinlaßkanal 12 verschlossen und ein konzentrisch außerhalb von diesem angeordneter Staulufteinlaßkanal 16 geöffnet wird. Hierdurch wird der im Lufteinlaß 11 ankommende Luftstrom unter Umgehung der Gasturbine 2 über den Staulufteinlaßkanal 16 und den Kanal 4 direkt dem Nachbrennerrohr 33 zugeführt. Gleichzeitig ist bei Staustrahlbetrieb ein Verschlußring 17, entgegen der in Fig. 1 gezeigten Stellung, axial nach hinten verschoben, und verschließt hierdurch den Gasturbinenauslaß 13.

Das erfindungsgemäße Zusammenwirken von Leitring 14 und Ringkonus 15 ist in den Fig. 2 und 3 für Staustrahl- bzw. Turbobetrieb vergrößert dargestellt.

In der in Fig. 2dargestellten Stellung befindet sich das Turbo-Staustrahltriebwerk 1 im Staustrahlbetrieb, so daß der Turbolufteinlaßkanal 12 mittels des Ringkonus 15 verschlossen ist. Gleichzeitig ist der Staulufteinlaßkanal 16 mit dem gemeinsamen Lufteinlaß 11 verbunden. Hierzu ist der Leitring 14 in seiner axial vorderen Endstellung verfahren. Der Ringkonus 15 hat eine Form, die aerodynamisch eine Fortsetzung eines den Luftstrahl im Bereich des Lufteinlasses 11 führenden Eintrittskonus 18 darstellt. Dabei liegt der Ringkonus innenseitig dichtend am Eintrittskonus 18 und außenseitig am Zwischengehäuse 19 an, welches den Turbolufteinlaßkanal 12 vom radial diesen umgebenden Staulufteinlaßkanal 16 trennt. Der Ringkonus 15 ist mittels einer Verstellvorrichtung 20 aus einer axial hinteren Endstellung bei Bedarf nach vorne verschiebbar, und wird durch diese auch gehalten und geführt. Diese Verstellvorrichtungen 20 sind im Eintrittskonus 18 abgestützt. Es ist alternativ auch möglich, diese Verstellvorrichtungen im Zwischengehäuse 19 unterzubringen und über Stangen mit der Hinterkante des Ringkonus 15 zu verbinden. Letztere Anordnung wird insbesondere dann zweckmäßig sein, wenn das Zwischengehäuse 19 eine ausreichende Dicke aufweist.

In der gezeigten Stellung schließt die Vorderkante 21 dichtend am Triebwerksgehäuse 10 ab. Die Hinterkante 22 liegt dichtend an einem ringförmigen Formkörper 23 an. Die Rückseite 24 des Leitrings 14 weist eine derartige Form auf, daß sie zusammen mit dem Formkörper 23 eine verlustarme Einleitung des im Lufteinlaß 11 befindlichen Luftstromes in den Staulufteinlaßkanal 16 ermöglicht. Der Leitring 14 ist mittels der Leitringverstellvorrichtung 25 in axialer Richtung entgegengesetzt zum Ringkonus 15 beweglich, wobei er entlang dem Formkörper 23 geführt ist. Dabei sind die beiden Verstellvorrichtungen 20 und 25 unabhängig voneinander betreibbar.

Es ist alternativ auch möglich, den Formkörper 23 gänzlich wegzulassen und den Leitring 14 entsprechend verlängert auszubilden. Diese Anordnung hat jedoch den Nachteil, daß die radial äußere Stützrippenreihe 9b nach axial hinten versetzt werden muß, und so eine ungünstigere Kraftführung der Gas- und Gewichtskräfte von der Gasturbine 2 in das Triebwerksgehäuse 10 erfolgt. Im Staustrahlbetrieb sind alle beweglichen Teile also insbesondere Leitring 14 und Ringkonus 15 fest verspannt und dichten ab, und alle Antriebs- und Führungselemente, insbesondere die Verstellvorrichtungen 20, 25 und die Schubstangen 27 und Haltestreben 26 sind abgedichtet und thermisch geschützt untergebracht, um eine Beaufschlagung durch die heiße Anströmluft von ca. 2200K zu verhindern.

Die Leitringverstellvorrichtung, die gleichzeitig der axialen Führung und Fixierung dient, ist abgeschlossen gegen Heißluft im Formkörper 23 untergebracht.

In Fig. 3 ist die erfindungsgemäße Vorrichtung im Turbobetrieb dargestellt, d.h., daß der Turbolufteinlaßkanal 12 mit dem gemeinsamen Lufteinlaß 11 verbunden ist, während der Staulufteinlaßkanal 16 verschlossen ist. Hierzu befindet sich der Ringkonus 15 in einer gegenüber Fig. 2 axial nach vorne verschobenen Stellung, was mittels der Verstellvorrichtung 20 durchgeführt wird. Der Ringkonus 15 ist mit der Verstellvorrichtung 20 über einer Reihe radial ausgerichteter Haltestreben 26 verbunden, die ihrerseits mit axial beweglichen Schub- und Führungsstangen 27 verbunden sind. Die Schub- und Führungsstangen 27 und die Haltestreben 26 sind im Querschnitt strömungsgünstig ausgebildet, wobei vorzugsweise durch ein tropfenartiges Querschnittsprofil neben einer günstigen Strömungskontur eine vergrößerte Biegesteifigkeit erzielbar ist. Der Eintrittskonus 18 weist eine Anzahl von Axialnuten 28 auf, in welche die Haltestreben 26 bei Staustrahlbetrieb einfahrbar sind, um die Strömungskontur des Eintrittskonus 18 so wenig wie möglich zu stören. Bei Turbobetrieb befindet sich der Leitring 14 in seiner axial hinteren Endstellung,wobei gleichzeitig der Formkörper 23 gegenüber der Luftströmung vollständig abgedeckt ist. Die Vorderseite 29 des Leitrings 14 ist dabei so ausgeformt, daß eine möglichst günstige Strömungskontur von der Innenseite des Triebwerksgehäuses 10 zum Zwischengehäuse 19 möglich ist.

Hierzu ist dessen stromaufwärtiger Vorderabschnitt konkav, und dessen hinterer Abschnitt konvex geformt. Die Kontur ist dabei derart ausgebildet, daß die Vorderseite 29 zusammen mit der Rückseite des Eintrittskonus 18 einen sich vom Lufteinlaß 11 zum Turbolufteinlaßkanal 12 verengenden Querschnitt aufweist, um so die Strömung zu beschleunigen und Strömungsablösungen zu verhindern.

Gleichzeitig dichted der Leitring 14 innenseitig gegen das Zwischengehäuse 19 und außenseitig gegen das Turbinengehäuse 10 ab, um zu verhindern, daß Heizgase vom Gasturbinenauslaß 13 rückwärts über den Kanal 4 in den Turbolufteinlaßkanal 12 rückströmen. Die außenseitige Abdichtung des Leitrings 14 kann auch gegenüber dem Formkörper 23 erfolgen, um die Dichtungskräfte zu reduzieren.

Leitring 14 und Formkörper 23 sind bezüglich ihrer Länge so aufeinander abgestimmt, daß die Hitnerkante 22 des Leitringes 14 kurz vor den Stützrippen 9b endet. Diese wiederum sollen radial mit den Stützrippen 9a fluchten, um eine möglichst günstige Kraftübertragung zu gewährleisten. Das Triebwerksgehäuse 10 ist wegen der hohen vorkommenden Temperaturen bei Staustrahlbetrieb als Isoliergehäuse ausgebildet, wodurch dessen große Dicke zu erklären ist. Bei Turbobetrieb ist eine derartige Dicke jedoch nicht erforderlich, so daß das Triebwerksgehäuse 10 ohne Vergrößerung des Außendurchmessers von innen gesehen im Bereich 30 konkav gewölbt sein kann, um einen verbeserten Übergang auf die Vorderseite 29 des Leitringes 14 zu erreichen und einen vergrößerten Durchmesser des Eintrittskonus 18 bei gleichzeitig erhaltenem Strömungsquerschnitt zu ermöglichen.

Die axial vordere Stellung des Ringkonus 15 wird zweckmäßigerweise so gewählt, daß der zwischen Ringkonus 15 und Eintrittskonus 18 definierte Ringkanal 31 einen Querschnitt aufweist, der mindestens dem Querschnitt des Stauluftkanals 16 entspricht. Dabei sind das Triebwerksgehäuse, der Ringkonus und der Eintrittskonus derart aufeinander abgestimmt, daß die Verhältnisse der Strömungsquerschnitte vom Ringkanal zwischen Triebwerksgehäuse und Ringkonus zum Ringkanal am Ein- und Austritt gleich sind.Dies erfolgt, um beim Umschalten von Turbo- auf Staustrahlbetrieb den im Ringkanal 31 befindlichen Luftstrom in den Staulufteinlaßkanal 16 umzulenken. Denn zum Umschalten wird zunächst der Leitring 14 nach vorne geschoben, wodurch der zwischen Ringkonus 15 und Triebwerksgehäuse 10 definierte äußere Ringkanal 32 mehr und mehr verschlossen wird. Gleichzeitig wird dadurch der Staulufteinlaßkanal 16 geöffnet, so daß der im inneren Ringkanal 31 befindliche Luftstrom mehr und mehr vom Turbolufteinlaßkanal 12 zum Staulufteinlaßkanal 16 umgelenkt wird. nachdem gleichzeitig mit dem Vorbewegen des Leitringes 14 der Verschlußring 17 (Fig. 1) des Gasturbinenauslasses 13 nach hinten geschoben wird und so der Durchsatz durch die Gasturbine 2 gestoppt wird, wird auch der Luftstrom zwangsläufig in den Staulufteinlaßkanal 16 umgeleitet. Durch das anschließende Zurückbewegen des Ringkonus 15 wird eine strömungsgünstige Kontur vom Eintrittskonus 18 zur Außenwand des Zwischengehäuses 19 hergestellt.

## Patentansprüche

1. Integriertes Turbo-Staustrahltriebwerk für ein Hyperschallflugzeug mit einem gemeinsamen Lufteinlaß für den Turbo- und den Staustrahlkreis, einem ringförmigen Turboeinlaßkanal, einem diesen konzentrisch umgebenden Staulufteinlaßkanal, der außenseitig von einem Triebwerksgehäuse begrenzt ist, einem Eintrittskonus und beweglichen Mitteln zum Ablenken des Luftstromes aus dem gemeinsamen Lufteinlaß in eine der beiden Einlaßkanäle, dadurch gekennzeichnet, daß die Mittel zum Ablenken des Luftstromes einen in Axialrichtung entlang des Triebwerksgehäuses (10) verschiebbaren Leitring (14) zum Abschließen des Stauluftkanals (16) und einen bezüglich des Leitringes (14) radial innenliegenden und gegensinnig verschiebbaren Ringkonus (11) zum Abschließen des Turboeinlaßkanals (12) umfassen, wobei die die Kanalwand bildende Kontur (24,29) des Leitringes (14) und der Ringkonus (15) strömungsgünstig ausgebildet sind.

2. Turbostaustrahltriebwerk nach Anspruch 1, dadurch gekennzeichnet, daß die Kontur des Leitringes (14) auf der Anströmseite (29) konisch sich verjüngend und auf der Abströmseite (24) konisch sich erweiternd ausgebildet ist.

3. Turbostaustrahltriebwerk nach Anspruch 2, dadurch gekennzeichnet, daß die Anströmseite (29) des Leitringes (14) ebenfalls zur Bildung einer aerodynamischen günstigen Strömungskontur vom Triebwerksgehäuse (10) zu einem Zwischengehäuse (19) zwischen Turboeinlaßkanal (12) und Staulufteinlaßkanal (16) ausgebildet ist.

4. Turbostaustrahltriebwerk nach Anspruch 2, dadurch gekennzeichnet, daß die Abströmseite (24) des Leitringes (14) im Zusammenwirken mit dem Ringkonus (15) bei Staustrahlbetrieb den Eintritt des Staulufteinlaßkanals (16) definiert.

5. Turbostaustrahltriebwerk nach Anspruch 2, dadurch gekennzeichnet, daß die Anströmseite (29) des Leitringes (14) in ihrem Vorderabschnitt eine Innenkrümmung (konkav) und in ihrem Hinterabschnitt eine Außenkrümmung (konvex) aufweist.

6. Turbostaustrahltriebwerk nach Anspruch 2, dadurch gekennzeichnet, daß der Leitring (14) in einen am Triebwerksgehäuse (10) angebrachten ringförmigen Formkörper (23) einschiebbar ist, wobei dieser die Kontur der Abströmseite (24) des Leitringes (14) bei Staustrahlbetrieb zum Triebwerksgehäuse (10) hin fortsetzt.

7. Turbostaustrahltriebwerknach Anspruch 2, dadurch gekennzeichnet, daß der Leitring (14) in seiner hinteren Endstellung außenseitig entlang des Formkörpers (23) und innenseitig entlang des Zwischengehäuses (19) abdichted.

8. Turbostaustrahltriebwerk nach Anspruch 1, dadurch gekennzeichnet, daß der Ringkonus (15) in seiner hinteren Stellung außenseitig im Bereich der Vorderkante eines Zwischengehäuses (19) abdichtet, und innenseitig dichtend am Eintrittskonus (18) anliegt.

9. Turbostaustrahltriebwerk nach Anspruch 8, dadurch gekennzeichnet, daß die vordere axiale Position des Ringkonus (15) derart festgelegt ist, daß der zwischen dem Ringkonus (15) und dem Eintrittskonus (18) gebildete Ringkanal (31) mindestens den Querschnitt des Staulufteinlaßkanals (16) aufweist.

10. Turbostaustahltriebwerk nach Anspruch 2, dadurch gekennzeichnet, daß das Triebwerksgehäuse (10), der Ringkonus (15) und der Eintrittskonus (18) im Bereich der axialen Erstreckung des Ringkonus (15) derart aufeinander abgestimmt sind, daß die Verhältnisse der Strömungsquerschnitte von Ringkanal (32) zwischen Triebwerksgehäuse (10) und Ringkonus (15) zum Ringkanal (31) am Ein- und Austritt gleich sind.

11. Turbostaustrahltriebwerk nach Anspruch 1, dadurch gekennzeichnet, daß am Ringkonus (15) entlang des Innenumfanges mehrere radial nach innen ausgerichteter Haltestreben (26) angebracht sind, die über axial ausgerichtete Schub- und Führungsstangen (27) mit den am Eintrittskonus (18) angebrachten Verstellvorrichtungen (20) verbunden sind.

12. Turbostaustrahltriebwerk nach Anspruch 1, dadurch gekennzeichnet, daß zum Umschalten von Turbo- auf Staustrahlbetrieb zunächst der Leitring (14) in seiner axial hinteren Position nach vorn verschiebbar ist, und anschließend der Ringkonus (15) aus seiner axial vorderen Position nach hinten verschiebbar ist.

13. Turbostaustrahltriebwerk nach Anspruch 11, dadurch gekennzeichnet, daß im Eintrittskonus (18) Radialnuten (28) zur Aufnahme der Haltestreben (26) vorgesehen sind.

14. Turbostaustrahltriebwerk nach Anspruch 1, dadurch gekennzeichnet, daß am Ringkonus (15) entlang seines Außenumfangs mehrere axial ausgerichtete Schub- und Führungsstangen angebracht sind, die mit im Zwischengehäuse angebrachten Verstellvorrichtungen gekoppelt sind.

## Claims

1. Integrated turbo ram jet engine for a hypersonic aircraft with a common air inlet for the turbo circuit and the ram jet circuit, an annular turbo inlet channel, a ram air inlet channel which surrounds the latter concentrically and is delimited on the exterior by an engine casing, an inlet cone and mobile parts for diverting the air flow out of the common air inlet into one of the two inlet channels, characterised in that the means for diverting the air flow include a guide ring (14), which is displaceable in an axial direction along the engine casing (10), to close the ram air channel (16), and a ring cone (11) which, in relation to the guide ring (14), is radially internal and displaceable in the opposite direction, for closing the turbo inlet channel (12), wherein the contour (24, 29) of the guide ring (14), forming the channel wall, and the ring cone (15) are formed so as to be expedient for flow.

2. Turbo ram jet engine according to Claim 1, characterised in that the contour of the guide ring (14) is formed on the inward flow side (29) in a conically tapering manner and on the outward flow side (24) in a conically widening manner.

3. Turbo ram jet engine according to Claim 2, characterised in that the inward flow side (29) of the guide ring (14) is likewise formed so as to form an aerodynamically expedient flow contour from the engine casing (10) to an intermediate casing (19) between the turbo inlet channel (12) and the ram air inlet channel (16).

4. Turbo ram jet engine according to Claim 2, characterised in that the outward flow side (24) of the guide ring (14), cooperating with the ring cone (15), defines the inlet of the ram air inlet channel (16) during ram jet operation.

5. Turbo ram jet engine according to Claim 2, characterised in that the inward flow side (29) of the guide ring (14) has an inward curvature (concave) in its front section and an outward curvature (convex) in its rear section.

6. Turbo ram jet engine according to Claim 2, characterised in that the guide ring (14) can be pushed into an annular shaped body (23) which is mounted on the engine casing (10), wherein the shaped body extends the contour of the outward flow side (24) of the guide ring (14) to the engine casing (10) during ram jet operation.

7. Turbo ram jet engine according to Claim 2, characterised in that the guide ring (14) in its rear end position seals along the shaped body (23) externally and along the intermediate casing (19) internally.

8. Turbo ram jet engine according to Claim 1, characterised in that the ring cone (15) in its rear position, seals externally an intermediate casing (19) in the vicinity of the front edge, and internally abuts the inlet cone (18) in a sealing manner.

9. Turbo ram jet engine according to Claim 8, characterised in that the front axial position of the ring cone (15) is set in such a manner that the ring channel (31) formed between the ring cone (15) and the inlet cone (18) has at least the cross-section of the ram air inlet channel (16).

10. Turbo ram jet engine according to Claim 2, characterised in that the engine casing (10), the ring cone (15), and the inlet cone (18) in the vicinity of the axial extension of the ring cone (15) are adapted to one another in such a way that the ratios of the flow cross-sections from the ring channel (32) between the engine casing (10) and the ring cone (15) to the ring channel (31) are identical at the inlet and the outlet.

11. Turbo ram jet engine according to Claim 1, characterised in that on the ring cone (15), along the internal periphery, a plurality of radially inwardly directed retaining struts (26) are mounted which are connected, via axially directed push and guide rods (27), to the displacement devices (20) mounted on the inlet cone (18).

12. Turbo ram jet engine according to Claim 1, characterised in that for the conversion from turbo to ram jet operation, the guide ring (14) is firstly displaceable towards the front in its axially rear position, and the ring cone (15) is subsequently displaceable from its axially front position towards the rear.

13. Turbo ram jet engine according to Claim 11, characterised in that radial grooves (28) for accommodating the retaining struts (26) are provided in the inlet cone (18).

14. Turbo ram jet engine according to Claim 1, characterised in that a plurality of axially directed push and guide rods are mounted on the ring cone (15) along its external periphery and coupled to displacement devices mounted in the intermediate casing.

## Revendications

1. Propulseur turbo-statoréacteur intégré pour un avion hypersonique avec une admission d'air connue pour le circuit du turboréacteur et pour le circuit du statoréacteur, avec un canal d'admission du turboréacteur de forme annulaire, avec un canal d'admission de l'air du statoréacteur entourant concentriquement le premier, qui est limité du côté extérieur par un carter de propulseur, avec un cône d'entrée et des moyens mobiles pour dévier le flux d'air depuis l'admission d'air commune dans l'un des deux canaux d'admission, propulseur caractérisé en ce que les moyens pour dévier le flux d'air comprennent un anneau conducteur (14) qui peut être déplacé dans le sens axial le long du carter du propulseur (10) pour former le canal (16) d'air du statoréacteur et un cône annulaire (11) se trouvant radialement à l'intérieur par rapport à l'anneau conducteur (14) et pouvant être déplacé à contre sens pour fermer le canal d'admission du turboréacteur (12), le contour (24, 29) formant la paroi du canal de l'anneau conducteur (14) et du cône annulaire (15) sont formés d'une façon favorable à l'écoulement.

2. Propulseur turbo-statoréacteur selon la revendication 1, caractérisé en ce que le contour de l'anneau conducteur (14) est formé en se rétrécissant de façon conique sur le côté (29) amont et en s'élargissant de façon conique sur le côté (24) aval.

3. Propulseur turbo-statoréacteur selon la revendication 2, caractérisé en ce que le côté amont (29) de l'anneau conducteur (14) est constitué également pour former un contour aérodynamique favorable du carter du propulseur (10) à un carter intermédiaire (19) entre le canal d'admission (12) du turboréacteur et le canal d'admission (16) du statoréacteur.

4. Propulseur turbo-statoréacteur selon la revendication 2, caractérisé en ce que le côté aval (24) de l'anneau conducteur (14) définit en coopération avec le cône annulaire (15) quand le statoréacteur est en fonctionnement, définit l'entrée du canal (16) d'admission d'air du statoréacteur.

5. Propulseur turbo-statoréacteur selon la revendication 2, caractérisé en ce que le côté amont (29) de l'anneau conducteur (14) présente dans sa section antérieure une courbure interne (concave) et dans sa section postérieure une courbure externe (convexe).

6. Propulseur turbo-statoréacteur selon la revendication 2, caractérisé en ce que l'anneau conducteur (14) peut être enfoncé dans un corps profilé (23) de forme annulaire disposé sur le carter (10) du propulseur, ce corps prolongeant le contour du côté aval (24) de l'anneau conducteur (14), quand le statoréacteur est en fonctionnement, ou vers le carter du propulseur (10).

7. Propulseur turbo-statoréacteur selon la revendication 2, caractérisé en ce que l'anneau conducteur (14) assure l'étanchéité dans sa position finale postérieure du côté extérieur le long du corps profilé (23) et du côté intérieur le long du carter intermédiaire (19).

8. Propulseur turbo-statoréacteur selon la revendication 1, caractérisé en ce que le cône annulaire (15) assure l'étanchéité dans sa position postérieure du côté extérieur dans la zone du bord antérieur d'un carter intermédiaire (19) et du côté intérieur repose de façon étanche sur le cône d'entrée (18).

9. Propulseur turbo-statoréacteur selon la revendication 8, caractérisé en ce que la position axiale antérieure du cône annulaire (15) est déterminée de telle façon que le canal annulaire (31) formé entre le cône annulaire (15) et le cône d'entrée (18) présente au moins la section transversale du canal d'admission d'air (16) du statoréacteur.

10. Propulseur turbo-statoréacteur selon la revendication 2, caractérisé en ce que le carter du propulseur (10), le cône annulaire (15) et le cône d'entrée (18) sont adaptés les uns aux autres dans la zone de l'étendue axiale du cône annulaire (15) de telle façon que les rapports des sections transversales d'écoulement du canal annulaire (32) entre le carter du propulseur (10) et le cône annulaire (15) au canal annulaire (31) à l'entrée et à la sortie sont égaux.

11. Propulseur turbo-statoréacteur selon la revendication 1, caractérisé en ce que sur le cône annulaire (15) sont disposés, le long du pourtour intérieur, plusieurs montants de retenue (26) dirigés radialement vers l'intérieur, reliés par des tringles de manoeuvre et de guidage (27) orientées axialement aux dispositifs de réglage disposés sur le cône d'entrée (18).

12. Propulseur turbo-statoréacteur selon la revendication 1, caractérisé en ce que l'anneau conducteur (14) peut être d'abord déplacé dans sa position axialement postérieure vers l'avant pour passer du fonctionnement en turboréacteur au fonctionnement en statoréacteur et en ce que le cône annulaire (15) peut être déplacé de sa position axialement antérieure vers l'arrière.

13. Propulseur turbo-statoréacteur selon la revendication 11, caractérisé en ce que dans le cône d'entrée (18) sont prévues des rainures radiales (28) pour recevoir les montants de retenue (26).

14. Propulseur turbo-statoréacteur selon la revendication 1, caractérisé en ce que sur le cône annulaire (15) le long de son pourtour extérieur, sont disposées plusieurs tringles de manoeuvre et de guidage orientées axialement, accouplées aux dispositifs de réglage disposés dans le carter intermédiaire.
